# EUROPÄISCHE PATENTANMELDUNG

(11) **EP 0 949 138 A2**
(43) Veröffentlichungstag der Anmeldung: **13.10.1999**
(21) Anmeldenummer: 99106775.2
(22) Anmeldetag: 06.04.1999
(51) Int. Cl.: B62D 25/20

(54) **Bodengruppe eines Personenkraftwagens**

(30) Priorität: 09.04.1998 DE 19816031
(71) Anmelder: Volkswagen Aktiengesellschaft, 38436 Wolfsburg (DE)
(72) Erfinder: Andronis, Odysseus, 38100 Braunschweig (DE); Fischer, Gerd, 38124 Braunschweig (DE); Vidakovic, Nikolaus, 38165 Lehre (DE)

(57) **Zusammenfassung**

Die Erfindung betrifft eine Bodengruppe (1; 55) eines Personenkraftwagens mit Bodenlängsträgem und dazwischen angebrachten Bodenblechen (5). Erfindungsgemäß sind drei Bodenlängsträger vorgesehen, die als gerade etwa parallel zur Fahrzeuglängsrichtung verlaufende Bodenschienen (2, 3, 4; 56, 57, 58) ausgebildet sind, von denen zwei als Seitenschienen (2, 3; 56, 57) und eine als Mittelschiene (4; 58) ausgebildet sind. Die Bodenschienen (2, 3, 4; 56, 57, 58) sind an einem unteren Bereich mit Bodenblechen (5) verbunden, so daß in Verbindung mit der linken Seitenschiene (2; 56) und der Mittelschiene (4; 58) eine langgestreckte linke Bodenwanne (7) und entsprechend in Verbindung mit der rechten Seitenschiene (3; 56) und der Mittelschiene (4; 58) eine langgestreckte rechte Bodenwanne (8) gebildet sind.

## Beschreibung

Die Erfindung betrifft eine Bodengruppe eines Personenkraftwagens nach dem Oberbegriff des Anspruchs 1.

Bodengruppen von Personenkraftwagen mit Bodenlängsträgers, Bodenquerträgem und Bodenblechen sind in unterschiedlichen Ausführungen und Anordnungen allgemein bekannt. Regelmäßig wird mit relativ komplizierten Träger- und Bodenblechausbildungen sowie mit gekrümmten Verläufen und Stützkonstruktionen eine Kompromißlösung für eine Reihe von Forderungen geschaffen, wie z. B. für eine gute Tragfähigkeit und Stabilität, für eine geeignete Abstützung und Krafteinleitung bei einem Aufprall, für einen bequemen Einstieg und große Beinfreiheit, für eine günstige Herstellung und Montage, usw. Solche bekannten Bodengruppen sind daher komplizierte Konstruktionen, die besonders für moderne, automatisierte Fertigungsverfahren und den Einsatz von Leichtmetallwerkstoffe nur bedingt geeignet sind. Zudem ist die Anbringung längsverstellbarer Sitze aufwendig und mit zusätzlichen Bauteilen verbunden.

Es ist weiter bekannt, an Teilen der Bodengruppe, insbesondere auf einen Mitteltunnel Funktionsteile anzubringen:

Bei einer bekannten Anordnung (DE 44 36 420 A1) sind auf einem Mitteltunnel ortsfeste mechanische Halterungen und elektrische Anschlüsse als Steckverbindungen für Sonderausstattungselemente, z. B. für eine Warmhaltebox oder Kühlbox angebracht. Die Handhabung ist durch den ortsfesten Anbau eingeschränkt.

Weiter sind Ausführungen von Kühlbehältern bekannt (DE 42 15 136 A1; DE-GM 93 09 084), die am Mitteltunnel befestigbar und an dortige Luftaustrittöffnungen einer Klimaanlage andockbar sind. Solche Kühlbehälter beeinflussen die Funktion der Innenraumkühlung negativ und sind durch die ortsfeste Anbringung in der Handhabung beschränkt.

Zudem ist ein Kühlbehälter in einer ortsfesten Mittelarmlehne bekannt, dessen Kühlelement aus einem Peltier-Element besteht. Durch eine Umpolung des Peltier-Elements erfolgt eine Funktionsumkehr zu einem Heizelement und der Kühlbehälter kann auch als Wärmebehälter betrieben werden.

Bei Nutzfahrzeugen ist es bekannt (DE 42 36 850 C1; EP 0 189 051 B1), ortsfest an der Oberseite eines Mitteltunnels Funktionselemente anzubringen. Darüber ist in einer bügelförmigen Anordnung eine in seitlichen Schienen geführte Ablage und Arbeitsfläche ggf. mit Staufächern und einem Tischelement verschiebbar gehalten. Die Verschiebbarkeit dieser Ablage- und Arbeitsfläche ermöglicht je nach Verschiebestellung den Zugang zu den darunter ortsfest am Mitteltunnel angebrachten Funktionselementen. Die Verschiebung erfolgt hier nur in einem relativ kurzen Bereich, da im Führerhaus eines Nutzfahrzeugs ohne Rücksitze der Mitteltunnel kurz ist.

Weiter ist es bekannt, über eine stromführende Schiene auf einem Mitteltunnel Elektrogeräte, insbesondere einen Rundfunkempfänger zwischen einem Frontsitzbereich und Rücksitzbereich verschiebbar anzuordnen (EP 0 178 196 B1).

Aufgabe der Erfindung ist es, eine einfach und funktionell aufgebaute Bodengruppe eines Personenkraftwagens zu schaffen, die zudem einfache Anbaulösungen von Funktionsteilen ermöglicht.

Diese Aufgabe wird mit den Merkmalen des Anspruchs 1 gelöst.

Gemäß Anspruch 1 sind drei Bodenlangsträger vorgesehen, die als gerade, etwa parallel zur Fahrzeuglängsrichtung verlaufende Bodenschienen ausgebildet sind und von denen jeweils zwei als Seitenschienen und eine als Mittelschiene angeordnet sind. Die Bodenschienen sind an einem unteren Bereich mit Bodenblechen verbunden, so daß die Bodenschienen nach oben in den Fahrzeuginnenraum vorstehen und durch die Bodenblechverbindung zwischen der linken Seitenschiene und der Mittelschiene eine langgestreckte linke Bodenwanne und entsprechend durch die Bodenblechverbindung der rechten Seitenschiene und der Mittelschiene eine langgestreckte rechte Bodenwanne gebildet sind.

Durch den Aufbau mit gerade verlaufenden Bodenschienen ergibt sich eine klare, einfache und günstig herstellbare Anordnung, wobei die Bodenschienen insbesondere als Strangpreßprofile vorzugsweise aus Leichtmetall herstellbar sind. Bei einer Frontalkollision ergibt sich eine vorteilhaft geradlinige Krafteinleitung in die Bodengruppe. Eine Sitzlängsverstellung kann in einem weiten Bereich durchgeführt werden, so daß insbesondere für große Personen durch das Fehlen von Querträgem eine entsprechend große Beinfreiheit zur Verfügung steht.

In einer vorteilhaften Weiterbildung der Anordnung enden die drei parallelen geraden Bodenschienenstücke vorne etwa im Bereich der Türpfosten. Dort schließen sich jeweils zwischen der Mittelschiene und der linken sowie rechten Seitenschiene gerade Vorderwagenträger in einer Keilanordnung und vorzugsweise in der gleichen Horizontalebene an. An der Keilspitze ist jeweils ein nach vorne weisender linker und rechter Frontlängsträger angeschlossen. Mit dieser Anordnung ist bei einem Frontaufprall durch die Keilanordnung und die Lage aller Trägerteile in einer Horizontalebene eine gut geeignete Krafteinleitung in die Bodengruppe möglich. Zudem können in den vorderen Seitenbereichen jeweils an die Keilanordnungen angrenzend Radhäuser ausgebildet werden.

Die Bodenschienen sollen vorteilhaft bis zum Fahrzeugheck jeweils einstückig und geradlinig durchgehend ausgebildet sein, wobei sich an den hinteren Ende ein hinterer Stoßfänger anschließen kann. Damit ist die Bodengruppe einfach aufgebaut und preisgünstig mit wenigen Teilen herstellbar.

In einer besonders bevorzugten Ausführungsform haben die Bodenschienen einen etwa rechteckigen Querschnitt und sind in der Einbaulage hochkant gestellt. Dadurch wird eine hohe Tragstabilität bei wenig Materialeinsatz erreicht. Gerade an so angeordneten Bodenschienen lassen sich besonders einfach Fahrzeugsitze längsverschiebbar anbringen. Dazu sind an den Bodenschienen vorzugsweise über der gesamten Länge Sitzlängsführungen angeordnet, die mit zugeordneten Eingriffteilen an den Fahrzeugsitzen zusammenwirken. Damit können separate Führungsschienen am Boden der beiden Bodenwannen und ggf. Stützfüße an den Fahrzeugsitzen entfallen. Bei entsprechend stabiler Ausführung der Sitzrahmen und Anschlußteile kann über die Sitze auch eine Querversteifung der Bodengruppe zwischen den Bodenschienen erreicht werden. Die Sitzlängsführungen können in einer vorteilhaft einfachen Ausführung als integrierte, hinterschnittene Führungsschlitze an den Bodenschienen ausgebildet sein, in die Gleitstücke oder Rollen von Fahrzeugsitzen eingreifen. Diese Führungsschlitze können mit Kunststoffprofilen als Verschleiß- und Gleitprofile ausgekleidet sein. Je nach den Gegebenheiten können diese Sitzlängsführungen an den Oberflächen oder auch an freien Seitenflächen der Bodenschienen als Schienenteile oder vorzugsweise in Strangprofile eingeformte Längsnuten angeordnet sein.

Bei langen Sitzlängsführungen, die vorzugsweise über die gesamte Bodenschienenlänge durchgehen. Ist es bei entsprechender Fahrzeuggröße einfach möglich, jeweils drei längsverstellbare rechtsseitige und drei längsverstellbare linksseitige Fahrzeugsitze hintereinander anzuordnen, die jeweils in weiten Bereichen gegeneinander verstellbar sind. In einer weiterbildenden Ausführungsform wird zudem wenigstens eine Querweiche zwischen den linksseitigen und rechtsseitigen Führungsbahnen der Fahrzeugsitze vorgeschlagen, so daß die Fahrzeugsitze von einer Führungsbahn in die andere verschiebbar sind. Dadurch können beispielsweise die normal beifahrerseitig befindlichen Fahrzeugsitze in die Führungsbahn hinter den Fahrersitz verschoben werden, so daß dann der gesamte Bodenwannenbereich neben der fahrerseitigen Führungsbahn als großer Laderaum zur Verfügung steht. Die Fahrzeugsitze sollen zur Festlegung ihrer jeweiligen Position an sich bekannte Feststelleinrichtungen besitzen.

Die Sitzlängsführungen können auch für weitere Funktionen genutzt werden: beispielsweise können dort auf einfache Weise Abstützpunkte für Gepäckverzurrungen durch Einschieben entsprechender Fußteile oder speziell angepaßte Halterungen für Gegenstände, wie z. B. Fahrradhalterungen angebracht werden.

Zweckmäßig werden alle verwendeten Bodenschienen sowie die Vorderwagenträger und Frontträger als Strangprofile mit gleichem Querschnitt als Leichtmetallhohlträger hergestellt. Insbesondere die Mittelschiene kann dabei in ihrem Hohlraum ähnlich einem bekannten Mitteltunnel Funktionselemente, wie beispielsweise Kabelbaumteile aufnehmen.

Ein Mitteltunnel eines Personenkraftwagens und vorzugsweise eine vorstehend beschriebene Mittelschiene eignet sich besonders gut zur Anbringung wenigstens eines Funktionsteils. Dazu wird vorgeschlagen, dort wenigstens eine von einem Frontsitzbereich zu einem Rücksitzbereich verlaufende Funktionsteil-Längsführung anzubringen oder zu integrieren, in der das Funktionsteil längsverschiebbar gehalten ist. Durch diese Möglichkeit der Längsverschiebung kann das Funktionsteil für eine gute und bequeme Handhabung sowohl für Frontpassagiere als auch Passagiere auf Rücksitzen zur Verfügung stehen oder ggf. in eine nicht störende Nichtbenutzungsstellung verschoben werden. Bevorzugt wird als Funktionsteil eine Multifunktionsbox und/oder ein Grundkasten zur Aufnahme von Utensilien und Funktionselementen oder ein Träger- und/oder Adapterteil für Funktionselemente verwendet. Gerade solche Funktionsteile sind für alle Fahrzeuginsassen nützlich und werden durch die Verschiebbarkeit für alle gut zugänglich.

Oft besteht ein Bedarf an heizbaren oder kühlbaren Elementen und Fächern, wie beispielsweise einem Warmhaltefach, einem Heißwasserbereiter, einem Espressobereiter, einem Eierkocher oder einer wärmegedämmten Kühlkammer, die in einer Multifunktionsbox mit entsprechender Heiz- und/oder Kühlvorrichtung enthalten sein können. Für einen kompakten, einfachen Aufbau wird eine Heiz-/Kühlvorrichtung mit der Möglichkeit einer Umsteuerung mit Funktionsumkehr vorgeschlagen, die beispielsweise mit Peltier-Elementen erreichbar ist.

Als Funktionsteil-Längsführungen werden auch hier hinterschnittene Führungsschlitze bevorzugt integriert in eine Mittelschiene als Strangpreßprofil angegeben, die mit Kunststoffprofilen als Gleit- und Verschleißprofile ausgekleidet sein können. In einer bevorzugten Weiterführungen sollen die Funktionsteil-Längsführungen stromführende, vorzugsweise verdeckte Längsbereiche aufweisen, an denen über Fußstücke oder Riegelstücke des Funktionsteil die Versorgungsenergie für elektrische Funktionselemente abgreifbar ist. Insbesondere kann damit auch eine Innenbeleuchtung einer Multifunktionsbox realisiert werden.

In einer komfortablen Ausführungsform kann ein Funktionsteil, vorzugsweise eine Multifunktionsbox mit einem Elektromotor und einem Stellantrieb für eine motorische Längsverstellung ausgerüstet werden. Diese Längsverstellung kann beispielsweise als Fembedienung vom Armaturenbrett aus oder direkt am Funktionsteil ansteuerbar sein. Vorteilhaft wird dabei der Elektromotor so ausgelegt, daß er im nicht angesteuerten Zustand die jeweilige Längseinstellung festlegt und blockiert. Andernfalls sind separate Stellungsverriegelungen vorzusehen.

Um einen Freigang zwischen längsverstellbaren Fahrzeugsitzen und einem längsverstellbaren Funktionsteil mit einer einfachen Anordnung zu gewährleisten, wird vorgeschlagen, zusätzlich zu wenigstens einer Funktionsteil-Längsführung am Mitteltunnel beidseitig, vorzugsweise jeweils an einer Seitenwand eine Sitzlängsführung anzubringen.

Hervorzuheben ist auch, daß bei der erfindungsgemäßen Bodengruppe die Füße des Fahrzeuginsassen zwischen den Längsträgem abgestellt werden können und nicht wie bislang für Sandwichbodenkonstruktionen üblich nur oberhalb der Längsträger abstellbar sind.

Anhand einer Zeichnung wird die Erfindung näher erläutert.

Es zeigen:
- Fig. 1: eine schematische, perspektivische Darstellung einer Bodengruppe eines Personenkraftwagens,
- Fig. 2: eine schematische, perspektivische Darstellung einer ähnlichen Ausführungsform einer Bodengruppe eines Personenkraftwagens, und
- Fig. 3: eine schematische Schnittdarstellung entlang der Linie A-A der Fig. 1.

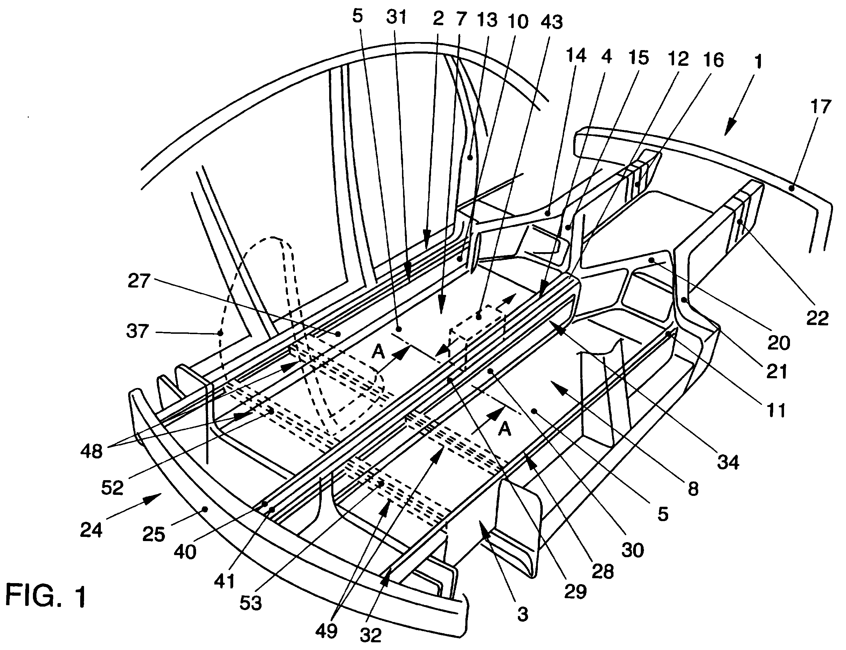

In der Fig. 1 ist eine Bodengruppe 1 eines Personenkraftwagens dargestellt, die drei Bodenlängsträger aufweist, die als gerade, parallel zur Fahrzeuglängsrichtung verlaufende Bodenschienen 2, 3, 4 ausgebildet sind und von denen jeweils zwei als Seitenschienen 2, 3 und eine als Mittelschiene 4 angeordnet sind.

Die Bodenschienen 2, 3, 4 sind an einem unteren Bereich mit Bodenblechen 5 verbunden, so daß die Bodenschienen 2, 3, 4 nach oben in den Fahrzeuginnenraum vorstehen. Durch diese Verbindung der Bodenschienen 2, 3, 4 mit den Bodenblechen 5 wird zwischen der linken Seitenschiene 2 und der Mittelschiene 4 eine langgestreckte linke Bodenwanne 7 und entsprechend zwischen der rechten Seitenschiene 3 und der Mittelschiene 4 eine langgestreckte rechte Bodenwanne 8 gebildet.

Die vorderen Enden 10, 11, 12 der Bodenschienen 2, 3, 4 enden etwa im Bereich der Türpfosten 13. An die vorderen Enden 10, 12 der linken Seitenschiene 2 und der Mittelschiene 4 schließen sich jeweils zwei linke gerade, schienenförmige Vorderwagenträger 14, 15 an, deren vorderen Enden etwa in der Längsmitte der linken Bodenwanne 7 in einer Keilanordnung verbunden sind. An dieser Keilverbindungsstelle schließt sich ein nach vorne weisender linker Frontlängsträger 16 in der gleichen Ebene an, wobei das vordere Ende dieses linken Frontlängsträgers 16 unmittelbar mit einem Stoßfänger 17 verbunden ist.

Entsprechend schließen sich an die vorderen Enden 11, 12 der rechten Seitenschiene 3 und der Mittelschiene 4 jeweils zwei rechte gerade, schienenförmige Vorderwagenträger 20, 21 an, deren vorderen Enden in der Längsmitte der rechten Bodenwanne 8 in einer Keilanordnung verbunden sind. An dieser keilförmigen Verbindungsstelle schließt sich ein nach vorne weisender rechter Frontlängsträger 22 in der gleichen Ebene an, wobei dessen vorderes Ende unmittelbar ebenfalls mit dem Stoßfänger 17 verbunden ist. Wie dies aus der Fig. 1 ferner ersichtlich ist, verläuft im Bereich der Keilverbindungsstellen zusätzlich ein in etwa senkrecht zu den Bodenschienen 2, 3, 4 ausgerichteter Querträger.

Wie dies aus der Fig. 1 weiter ersichtlich ist, sind die Bodenschienen 2, 3, 4 einstückig und geradlinig durchgehend bis zum Fahrzeugheck 24 ausgebildet, wobei sich an deren hinteren Enden ein hinterer Stoßfänger 25 unmittelbar anschließt.

Die Bodenschienen 2, 3, 4, die aus Leichtmetall hergestellt sind, weisen für eine hohe Tragstabilität bei wenig Materialeinsatz einen rechteckigen Querschnitt auf und sind in der Einbaulage hochkant gestellt.

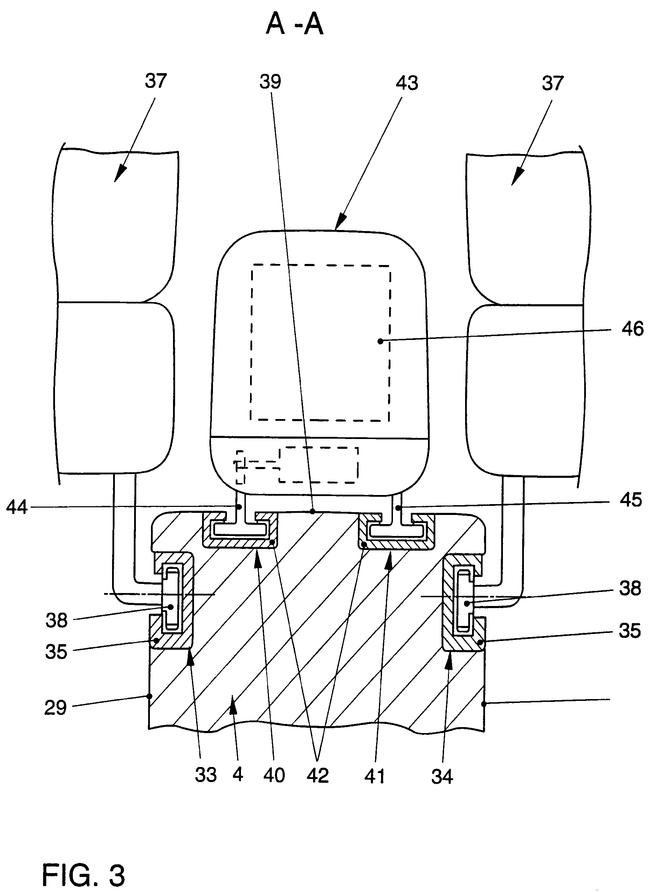

Wie dies aus den Fig. 1 und 3 ersichtlich ist, sind jeweils an den der linken Bodenwanne 7 und der rechten Bodenwanne 8 zugeordneten freien Seitenflächen 27, 28, 29, 30 der Bodenschienen 2, 3, 4 über deren gesamter Länge Sitzlängsführungen 31, 32, 33, 34 angebracht. Diese Sitzlängsführungen 31, 32, 33, 34 sind, wie dies insbesondere aus der Fig. 3 ersichtlich ist, die die Sitzlängsführungen 33, 34 an den freien Seitenflächen 29, 30 der Mittelschiene 4 zeigt, als hinterschnittene Führungsschlitze ausgebildet, die mit Verschleißprofilen 35 ausgekleidet sind.

In diesen mit Verschleißprofilen 35 ausgekleideten Sitzlängsführungen 31, 32, 33, 34 sind jeweils beidseitig im unteren Bereich eines in der Fig. 1 lediglich strichliert eingezeichneten Fahrzeugsitzes 37 angebrachte Gleitstücke 38 gehalten.

Wie dies aus der Fig. 1 und insbesondere aus der Fig. 3 ersichtlich ist, sind an einer Oberfläche 39 der Mittelschiene 4 zwei wenigstens von einem Frontsitzbereich zu einem Rücksitzbereich verlaufende Funktionsteil-Längsführungen 40, 41 ausgebildet. Diese Funktionsteil-Längsführungen 40, 41 sind als im Querschnitt hinterschnittene, mit Verschleißprofilen 42 ausgekleidete Führungsschlitze ausgebildet, in denen jeweils beidseitig im unteren Bereich einer Multifunktionsbox 43 angebrachte Fußstücke 44, 45 verschiebbar und verriegelbar als Riegelfüße gehalten sind.

Die Multifunktionsbox 43 enthält bevorzugt eine Heizvorrichtung für ein Warmhaltefach, einen Heißwasserbereiter und/oder einen Espressobereiter und/oder einen Eierkocher sowie ferner eine wärmegedämmte Kühlkammer mit einer Kühlvorrichtung. Vorzugsweise ist eine zur Funktionsumkehr umsteuerbare Heiz-/Kühlvorrichtung als Peltier-Vorrichtung vorgesehen. Die Funktionsteil-Längsführungen 40, 41 weisen stromführende, verdeckte Längsbereiche auf, an denen über die Fußstücke 44, 45 der Multifunktionsbox 43 eine Versorgungsenergie für die Heiz-/Kühlvorrichtung abgegriffen werden kann. Für eine motorische Längsverstellung der Multifunktionsbox 43 kann zudem im Bodenbereich ein in der Fig. 3 strichliert eingezeichneter Elektromotor 46 mit Stellantrieb angeordnet sein.

Wie dies insbesondere aus der Fig. 1 ersichtlich ist, sind zwischen der linken Seitenschiene 2 und der Mittelschiene 4 sowie zwischen der rechten Seitenschiene 3 und der Mittelschiene 4 jeweils Querweichen 48, 49 mit Sitzquerführungen 52, 53 angeordnet, mittels der die Fahrzeugsitze 37, von denen in der Fig. 1 lediglich einer strichliert eingezeichnet ist, aus dem Bereich der linken Bodenwanne 7 in den Bereich der rechten Bodenwanne 8 und umgekehrt verschiebbar sind.

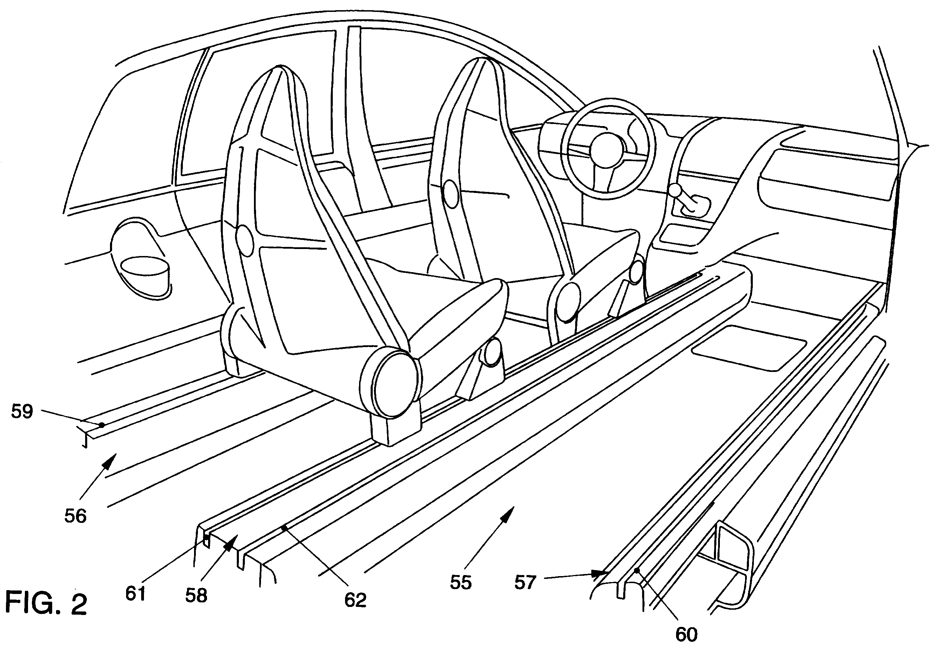

In der Fig. 2 ist eine alternative Ausführungsform einer Bodengruppe 55 dargestellt, die einen grundsätzlich gleichen Aufbau wie die Bodengruppe 1 aufweist und eine linke Seitenschiene 56, eine rechte Seitenschiene 57 sowie eine Mittelschiene 58 umfaßt. Im Unterschied zu den Bodenschienen 2, 3, 4 der Bodengruppe 1 sind die Sitzlängsführungen 59, 60, 61, 62 hier an den Oberflächen der Bodenschienen 56, 57, 58 angeordnet.

Vorzugsweise werden in den Ausführungsformen der Fig. 1 bis 3 bei entsprechender Fahrzeuggröße jeweils drei längsverstellbare rechtsseitige und drei längsverstellbare linksseitige Fahrzeugsitze 37 hintereinander angeordnet, die jeweils in weiten Bereichen gegeneinander verstellbar sind.

## Patentansprüche

1. Bodengruppe eines Personenkraftwagens, mit Bodenlängsträgern und dazwischen angebrachten Bodenblechen,
**dadurch gekennzeichnet,**
daß drei Bodenlängsträger vorgesehen sind, die als gerade, etwa parallel zur Fahrzeuglängsrichtung verlaufende Bodenschienen (2, 3, 4; 56, 57, 58) ausgebildet sind und von denen zwei jeweils als Seitenschienen (2, 3; 56, 57) und eine als Mittelschiene (4; 58) angeordnet sind, und
daß die Bodenschienen (2, 3, 4; 56, 57, 58) an einem unteren Bereich mit Bodenblechen (5) verbunden sind, so daß in Verbindung mit der linken Seitenschiene (2; 56) und der Mittelschiene (4; 58) eine langgestreckte linke Bodenwanne (7) und entsprechend in Verbindung mit der rechten Seitenschiene (3; 57) und der Mittelschiene (4; 58) eine langgestreckte rechte Bodenwanne (8) gebildet sind.

2. Bodengruppe nach Anspruch 1,
**dadurch gekennzeichnet,**
daß die vorderen Enden (10, 11, 12) der geraden Bodenschienen (2, 3, 4; 56, 57, 58) etwa im Bereich einer Verbindungslinie durch vordere Türpfosten (13) in der Ebene der Bodenschienen (2, 3, 4; 56, 57, 58) mit Vorderwagenträgem (14, 15, 20, 21) verbunden sind, dergestalt,
daß die vorderen Enden (10, 12) der linken Seitenschiene (2; 56) und der Mittelschiene (4; 58) jeweils mit zwei linken geraden, bevorzugt schienenförmigen Vorderwagenträgem (14, 15) verbunden sind, die vorderen Enden dieser linken Vorderwagenträger (14, 15) etwa in der Längsmitte der linken Bodenwanne (7) in einer Keilanordnung verbunden sind und sich an dieser Verbindungsstelle ein nach vorne weisender linker Frontlängsträger (16) bevorzugt in der gleichen Ebene anschließt an dessen vorderem Ende ein Stoßfänger (17) unmittelbar oder mittelbar verbunden ist, und
daß entsprechend die vorderen Enden (11, 12) der rechten Seitenschiene (3; 57) und der Mittelschiene (4; 58) jeweils mit zwei rechten geraden, bevorzugt schienenförmigen Vorderwagenträgern (20, 21) verbunden sind, die vorderen Enden dieser rechten Vorderwagenträger (20, 21) etwa in der Längsmitte der rechten Bodenwanne (8) in einer Keilanordnung verbunden sind und sich an dieser Verbindungsstelle ein nach vorne weisender rechter Frontlängsträger (22) bevorzugt in der gleichen Ebene anschließt an dessen vorderem Ende der Stoßfänger (17) unmittelbar oder mittelbar verbunden ist.

3. Bodengruppe nach Anspruch 1 oder Anspruch 2, **dadurch gekennzeichnet,** daß die geraden Bodenschienen (2, 3, 4; 56, 57, 58) bis zum Fahrzeugheck (24) durchgehend ausgebildet sind, wobei an deren hinteren Enden vorzugsweise ein hinterer Stoßfänger (25) unmittelbar oder mittelbar befestigt ist.

4. Bodengruppe nach einem der Ansprüche 1 bis 3, **dadurch gekennzeichnet,** daß die Bodenschienen (2, 3, 4; 56, 57, 58) einen etwa rechteckigen Querschnitt aufweisen und in der Einbaulage hochkant gestellt sind.

5. Bodengruppe nach einem der Ansprüche 1 bis 4, **dadurch gekennzeichnet,** daß an den Bodenschienen (2, 3, 4; 56, 57, 58) vorzugsweise über deren gesamter Länge Sitzlängsführungen (31, 32, 33, 34; 59, 60, 61, 62) angebracht sind in denen linksseitige und rechtsseitige Fahrzeugsitze (37) längsverstellbar gehalten sind, wobei an der linken und an der rechten Bodenschiene (2, 3; 56, 57) wenigstens jeweils eine Sitzlängsführung (31, 32; 59, 60) und an der Mittelschiene (4; 58) wenigstens zwei beabstandete Sitzlängsführungen (33, 34; 61, 62) angebracht sind.

6. Bodengruppe nach Anspruch 5, **dadurch gekennzeichnet,** daß die Sitzlängsführungen (31, 32, 33, 34; 59, 60, 61, 62) im Querschnitt als hinterschnittene, vorzugsweise mit Verschleißprofilen (35) ausgekleidete Führungsschlitze ausgebildet sind, in denen jeweils beidseitig im unteren Bereich eines Fahrzeugsitzes (37) angebrachte Gleitstücke (38) und/oder Rollen gehalten sind.

7. Bodengruppe nach Anspruch 5 oder Anspruch 6, **dadurch gekennzeichnet,** daß die Sitzlängsführungen (31, 32, 33, 34; 59, 60, 61, 62) an Oberflächen (39) und/oder an freien Seitenflächen (27, 28, 29, 30) der Bodenschienen (2, 3, 4; 56, 57, 58) angeordnet sind.

8. Bodengruppe nach einem der Ansprüche 5 bis 7, **dadurch gekennzeichnet,** daß jeweils wenigstens drei längsverstellbare rechtsseitige Fahrzeugsitze (37) und wenigstens drei längsverstellbare linksseitige Fahrzeugsitze (37) hintereinander angeordnet sind.

9. Bodengruppe nach einem der Ansprüche 5 bis 8, **dadurch gekennzeichnet,** daß eine Querweiche (48,49), vorzugsweise in der Form von Querstegen mit Sitzquerführungen (52, 53) vorgesehen ist, mittels der Fahrzeugsitze (37) aus dem linksseitigen in den rechtsseitigen Schienenbereich und umgekehrt verschiebbar sind.

10. Bodengruppe nach einem der Ansprüche 1 bis 9, **dadurch gekennzeichnet,** daß die Bodenschienen (2, 3, 4; 56, 57, 58) gegebenenfalls mit Sitzlängsführungen (31, 32, 33, 34; 59, 60, 61, 62) und/oder die Vorderwagenträger und/oder die Frontträger als Strangpreßprofile vorzugsweise aus Leichtmetall hergestellt sind.

11. Bodengruppe mit wenigstens einem Funktionsteil insbesondere nach einem der Ansprüche 1 bis 10, **dadurch gekennzeichnet,** daß auf einem bevorzugt als Mittelschiene (4) ausgebildeten Mitteltunnel wenigstens eine von einem Frontsitzbereich zu einem Rücksitzbereich verlaufende Funktionsteil-Längsführung (40, 41) angebracht oder integriert ist, in der das Funktionsteil (43) längsverschiebbar gehalten ist.

12. Bodengruppe nach Anspruch 11, **dadurch gekennzeichnet,** daß das Funktionsteil eine Multifunktionsbox (43) und/oder ein Grundkasten zur Aufnahme von Utensilien und Funktionselementen oder ein Träger- und/oder Adapterteil für Funktionselement ist.

13. Bodengruppe nach Anspruch 12, **dadurch gekennzeichnet,** daß das Funktionsteil als Multifunktionsbox (43) eine Heizvorrichtung enthält, bevorzugt für ein Warmhaltefach, einen Heißwasserbereiter und/oder einen Espressobereiter und/oder einen Eierkocher.

14. Bodengruppe nach Anspruch 12 oder Anspruch 13, **dadurch gekennzeichnet,** daß das Funktionsteil (43) eine wärmegedämmte Kühlkammer mit einer Kühlvorrichtung aufweist.

15. Bodengruppe nach Anspruch 13 oder Anspruch 14, **dadurch gekennzeichnet,** daß eine zur Funktionsumkehr umsteuerbare Heiz-/Kühlvorrichtung bevorzugt eine Peltier-Vorrichtung vorgesehen ist.

16. Bodengruppe nach einem der Ansprüche 11 bis 15, **dadurch gekennzeichnet,** daß wenigstens zwei parallele Funktionsteil-Längsführungen (40, 41) als im Querschnitt hinterschnittene, vorzugsweise mit Verschleißprofilen (42) ausgekleidete Führungsschlitze ausgebildet sind, in denen jeweils beidseitig im unteren Bereich des Funktionsteils (43) angebrachte Fußstücke (44, 45) verschiebbar und vorzugsweise verriegelbar als Riegelfüße gehalten sind.

17. Bodengruppe nach einem der Ansprüche 11 bis 16, **dadurch gekennzeichnet,** daß die Funktionsteil-Längsführungen (40, 41) stromführende, vorzugsweise verdeckte Längsbereiche aufweisen, an denen über Fußstücke (44, 45) oder Riegelfüße des Funktionsteils (43) eine Versorgungsenergie für Funktionselement abgreifbar ist.

18. Bodengruppe nach einem der Ansprüche 11 bis 17, **dadurch gekennzeichnet,** daß im Funktionsteil (43) vorzugsweise im Bodenbereich einer Funktionsbox (43) ein Elektromotor (46) mit Stellantrieb für eine motorische Längsverstellung des Funktionsteils (43) angeordnet ist.

19. Bodengruppe nach einem der Ansprüche 11 bis 18, **dadurch gekennzeichnet,** daß zusätzlich zu wenigstens einer Funktionsteil-Längsführung (40, 41) beidseitig am Mitteltunnel (4), vorzugsweise jeweils an einer Seitenwand eine Sitzlängsführung (33, 34) angebracht ist.
